# EUROPEAN PATENT SPECIFICATION

(11) **EP 0 608 578 B1**
(45) Date of publication and mention of the grant of the patent: **26.08.1998**
(21) Application number: 93200225.6
(22) Date of filing: 28.01.1993
(51) Int. Cl.: H04L 7/033

(54) **Synchronizing circuit**
Synchronisierungsschaltung
Circuit de synchronisation

(43) Date of publication of application: 03.08.1994
(73) Proprietor: ALCATEL ALSTHOM COMPAGNIE GENERALE D'ELECTRICITE, 75008 Paris (FR)
(72) Inventor: De Laender, Jos Camiel Irène, B-9620 Zottegem (BE); Ceuterick, Joan Berthe Sylvain, B-3001 Heverlee (BE); Meylemans, Philippe, B-3009 Winksele (BE)
(74) Representative: Narmon, Gisèle Marie Thérèse

(56) References cited:
- EP-A- 379 279
- GB-A- 2 069 263
- US-A- 4 756 011

## Description

The present invention relates to a synchronizing circuit for synchronizing a digital input signal, synchronous with a first clock signal, with a second clock signal, said circuit including a detection means controlled by said second clock signal to detect value transitions of a signal applied thereto and to accordingly provide a control signal indicative of said transition, and a sampling means also controlled by said second clock signal to sample a signal derived from said digital input signal under control of said control signal, thereby providing a synchronized input signal.

Such a synchronizing circuit is already known in the art, e.g. from the published European Patent Application with publication number 0491090 A1. Therein, the detection means detects whether a clock signal, derived from the input signal, is synchronous with the second clock signal or not. If not, a relative phase shift of the first and the second clock signal is realized by a phase adjustment device under control of the generated control signal which is additionally used to sample the input signal.

The detection means of this known synchronizing circuit has to operate at least at the rate of the input signal, and this rate can be relatively high in currently existing transmission systems. Moreover, the adjustment device included in the circuit increases the complexity thereof.

An object of the present invention is to provide a synchronizing circuit of the above known type but which can operate at a rate which is lower than the rate of the input signal and which does not need a phase adjustment device, thereby making the implementation of the synchronizing circuit less complex.

According to the invention, this object is achieved due to the fact that said synchronizing circuit additionally includes a demultiplexing means controlled by said first clock signal to demultiplex said input signal into a plurality of demultiplexed input signals constituting said derived digital input signal and a divider means to generate from said first clock signal a plurality of frequency divided first clock signals each of which is applied to said detection means which derives therefrom an associated control signal to control the sampling of a corresponding one of said demultiplexed input signals, said associated control signals constituting said control signal and said sampled demultiplexed output signals constituting said synchronized output signal.

The plurality of demultiplexed input signals are indeed, due to the demultiplexing, stable during an interval equal to the number of demultiplexed signals multiplied by the period of the first clock signal and the frequency divided first clock signals are stable during their period multiplied by their division factor which is equal to the number of demultiplexed input signals. As a result the detection device can operate at a slower rate than in the known circuit since it has more time for each frequency divided clock signal to detect its transitions and the synchronization of the demultiplexed input signals can then be based on the fact that each of these signals are stable during a relatively long period. The association between a demultiplexed input signal and an associated control signal which is determined by the above transitions, can inded, due to the above mentioned lengthened stability , easily be chosen in such a way that the delay between both signals is such that the demultiplexed input signal is sampled in its stable intervals as near as possible to a possible following transition thereof thus providing the possibility of a relatively long setup delay of the previous transition. The detection of the transition of the frequency divided first clock signal will consequently, due to a predetermined chosen delay with respect to the first clock signal, lead to a sampling instant which does not correspond with a value transition of the demultiplexed data signal. The thus sampled demultiplexed signals are therefore synchronized with the second clock signal and can be combined in one or more synchronized signals depending on the frequency relation between the two clock signals, provided that this frequency relation is constant.

However, the present invention is also applicable when the frequency relation between the two mentioned clocks varies. In that case the synchronized signals can for instance be stored in a memory module the moment they are stable and can be retrieved afterwards and handled according to specific applications.

A characteristic feature of the synchronizing circuit according to the present invention is that said detection means includes a plurality of detection circuits, each of which is associated to one of said frequency divided first clock signals and includes at least two cascaded flipflops, to an input of a first one of which said associated frequency divided first clock signal is applied and respective outputs of which are connected to respective inputs of a comparison means which provides said associated control signal.

In this way the associated control signal, indicative of the transition of the frequency divided first clock signal, is generated.

Another characteristic feature of the synchronizing circuit according to the present invention is that said sampling means includes a plurality of sampling circuits each of which is associated with one of said demultiplexed input signals and includes a 2-to-1 multiplexer controlled by said associated control signal to generate at an output thereof either said associated demultiplexed input signal or an output signal of a flipflop, controlled by said second clock signal and to an input of which an output of said 2-to-1 multiplexer is connected.

Yet another characteristic feature of the synchronizing circuit according to the present invention is that said divider means includes a counter generating said frequency divided first clock signals which have a frequency equal to the frequency of said first clock signal divided by said plurality, the respective detection circuit to which each of said frequency divided first clock signals is applied being chosen in such a way that said frequency divided first clock signal is relatively delayed over a predetermined time interval with respect to said corresponding demultiplexed input signal.

Still another characteristic feature of the synchronizing circuit according to the invention is that when there is a predetermined constant relation between the frequency of said first and said second clock signal, said synchronizing circuit additionally includes recombinaton means to recombine said sampled demultiplexed input signals into a predetermined number of synchronized signals, said recombination means including a predetermined number of multiplexers equal to said predetermined number of synchronized signals and in that each of said multiplexers multiplexes a second predetermined number of sampled demultiplexed input signals equal to said plurality of sampled demultiplexed input signals divided by said predetermined number of synchronized signals and are controlled by a predetermined one of said control signals and by said second clock signal, said predetermined control signal being chosen in such a way that the sampled demultiplexed signals applied to the inputs of the controlled multiplexer are stable at the moment of said multiplexing which is started by said control signal and that no signal values are skipped during said multiplexing.

In case of e.g. a first clock signal with a frequency of 80 MHz and a second clock signal with a frequency of 40 MHz, the predetermined relation is 2 to 1 and the predetremined number of synchronized signals is 2. Providing a demultiplexing factor of 8, each multiplexer then handles 4 demultiplexed input signals. The control signal controlling when each multiplexer has to start its action has to be chosen in such a way that the 4 demultiplexed input signal applied to the associated multiplexer are stable at the moment of their multiplexing and that no values are lost between two consecutive multiplexings of the same signal, there being 4 clock periods of the second clock between two consecutive multiplexing starts. Had the relation between the first and the second clock frequency been 3 to 1, then the synchronized signal had had to be composed of at least three signals synchronized with the second clock signal.

Yet another characteristic of the synchronizing circuit according to the invention is that, when there is no constant predetermined relation between the frequency of said first and second clock signal, said sampled demultiplexed input signals are under control of predetermined ones of said control signals stored in a memory module to be subsequently read therefrom in a predetermined way.

When the frequency relation between the two clocks is varying, e.g. from 20 to 80 MHz for the first clock signal whilst the frequency of the second clock signal equals 40 MHz, then, providing the demultiplexing factor is 8, the sampled input signals can be stored in sets of for instance 4 signals in a memory module when they are stable. These stable moments are indicated by well chosen ones of the control signals as will be explained later.

The above mentioned and other objects and features of the invention will become more apparent and the invention itself will be best understood by referring to the following description of an embodiment taken in conjunction with the accompanying drawings wherein :
Fig 1 shows a synchronizing circuit according to the invention; and
Figs 2 and 2A represent time diagrams of signals at different points of the synchronizing circuit of Fig. 1.

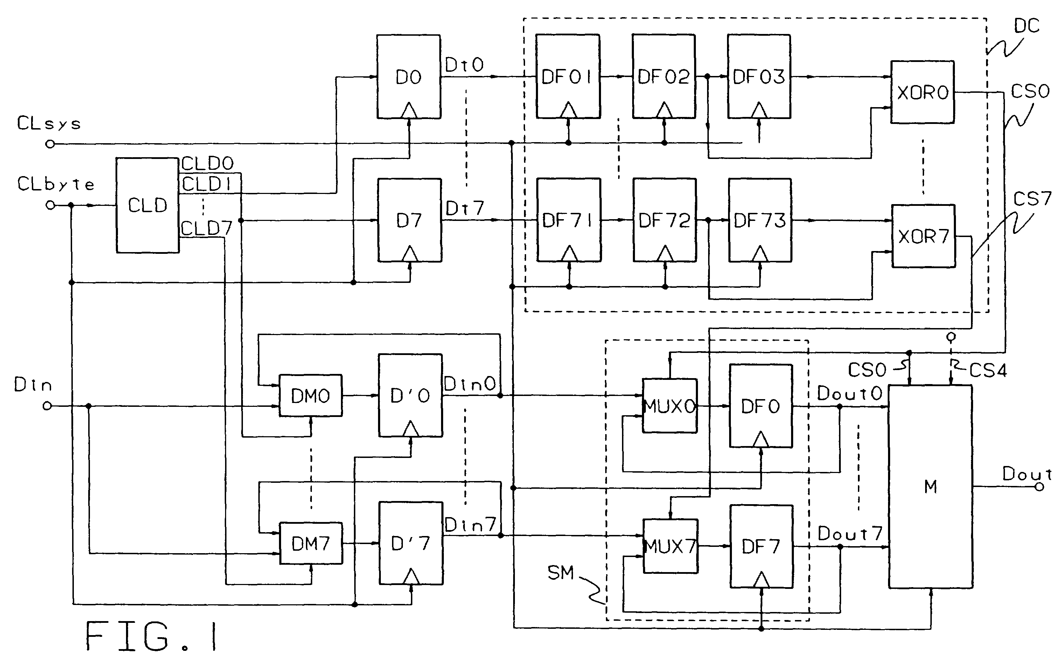

The synchronizing circuit of Fig. 1 is used in a BroadBand Integrated Services Data Network (BBISDN) terminal link board to synchronize an incoming bytestream Din synchronous with a first clock signal CLbyte which has a clock frequency varying from 20 to 80 MHz, with a second clock signal CLsys which is a system clock signal having a stable frequency of 40 MHz.

The synchronizing circuit has 3 input terminals CLsys, CLbyte and Din, at which the likenamed signals are applied, and an output terminal Dout where a likenamed synchronized signal is generated.

The signal Din is applied to a first input of 8 2-to-1 demultiplexers DM0 to DM7 an output of each of which is connected to a respective D flipflop D'0/D'7, an output of D'0 to D'7, i.e. Din0 to Din7 respectively, where likenamed signals are generated, is connected to a second input of the demultiplexers DM0 to DM7 which are controlled by respective output signals CLD0 to CLD7 of a divider circuit CLD to an input of which CLbyte is applied.

CLD and DM0 to DM7 consistute a demultiplexing means which demultiplexes Din into 8 demultiplexed input signals Din0 to Din7.

Each output of CLD, i.e. CLD1 to CLD7 and CLD0, is connected to an input of a respective one of the 8 D flipflops D0 to D7, i.e. CLD1 to D0, CLD2 to D1, ..., CLD7 to D6 and CLD0 to D7, and each of the signals provided by D0 to D7, i.e. Dt0 for D0, Dt1 for D1, ... is applied to a respective cascade connection of 3 D-flipflops DF01 to DF03;...;DF71 to DF73, controlled by the system clock signal CLsys. The outputs of the last two flipflops of each cascade connection, e.g. DF02 and DF03 for Dt0, are connected with respective inputs of a respective Exclusive OR gate XOR0; ... ;XOR7 which generates a control signal CS0; ...; CS7.

Each set of DF01, DF02, DF03, XOR0 to DF71, DF72, DF73, XOR7 realizes a detection circuit which, as will be explained later, detects the transitions of the respective signal Dt0; ...; Dt7, all detection circuits together realizing a detection means DC.

The outputs of D'0 to D'7, i.e. Din0 to Din7 are also connected to identical multiplexing circuits which for instance for D'O include the cascade connection of a 2-to-1 multiplexer MUX0 and a D-flipflop DF0, DF0 being controlled by CLsys and MUX0 being controlled by CS0 to provide at its output either one of the associated demultiplexed input signal Din0 and an output signal of DF0, depending on the control signal CS0 being activated or not.

The output signals of DF0 to DF7, i.e. Dout0 to Dout7, are applied to respective inputs of a recombination circuit M. M is a memory module in which Dout0 to Dout7 are stored in groups of 4 under control of CS0 and CS4 as explained later.

To be noted that all D-flipflops of the synchronizing circuit are positive edge triggered flipflops.

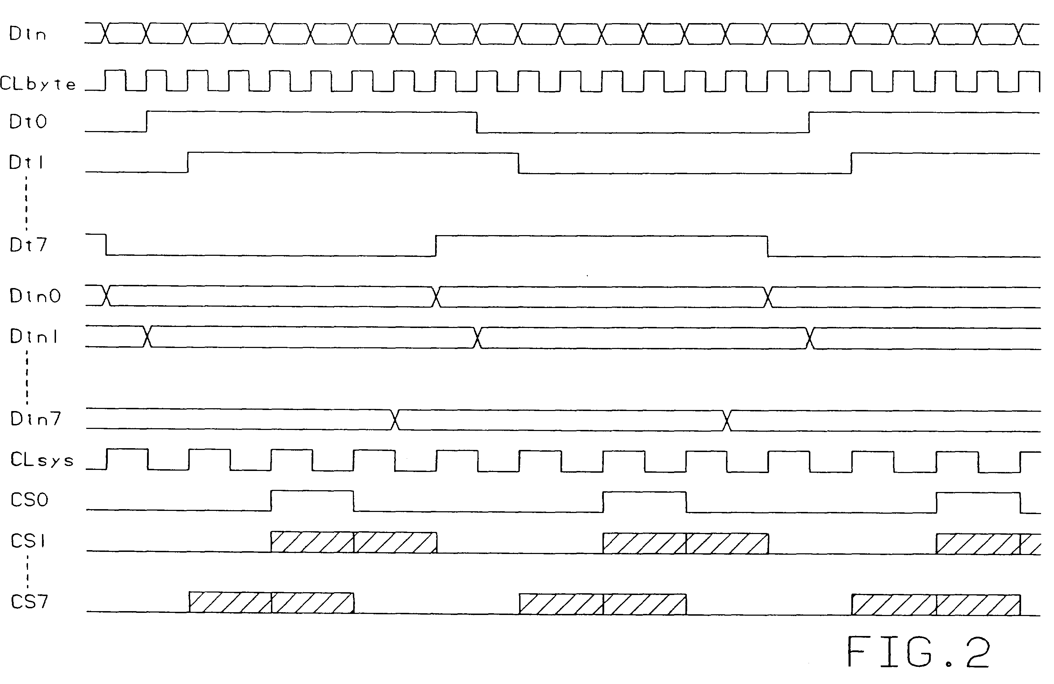

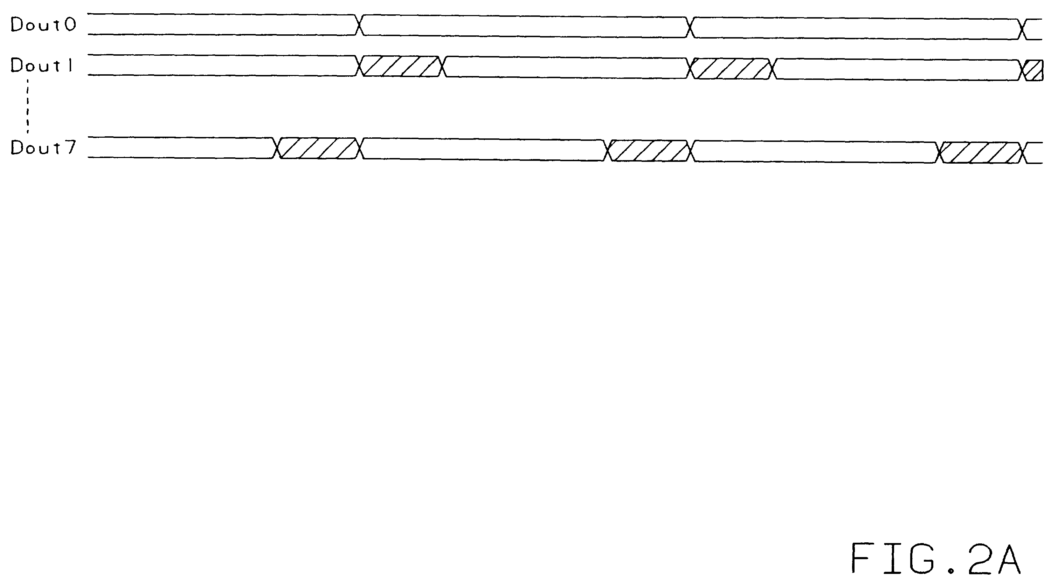

Following is now a description of the working of the synchronizing circuit, using as references Figs 1, 2 and 2A.

The clock signal CLbyte which is synchronous with Din is by CLD divided in 8 frequency divided clock signals CLD0 to CLD7 the values of which remain stable during 8 clock perios of CLbyte and each of which is delayed over one clock period of CLbyte with respect to the previous one, i.e. CLD1 with respect to CLD0, CLD2 with respect to CLD1, and so on. As a consequence Dt0 to Dt7, which are derived from CLD1 to CLD7 and CLD0 respectively, are delayed over one period of CLbyte with respect to Din0 to Din7, as can be seen in Fig. 2, and the latter signals also have values which remain constant during 8 clock periods of CLbyte. These values are determined by the value of Din at the moment CLD0 to CLD7 respectively go high.

The thus obtained Dt0 to Dt7 are with their associated demultiplexed input signals Din0 to Din7 respectively handled in the same way and therefore only the signals Dt0 and Din0 are considered hereafter.

The signal transitions of Dt0 are detected by comparing the output signals of DF02 and DF03. Indeed, at a signal transition these values are different and the transition is thus detected when the output signal CS0 of XOR0 is activated. The moment CS0 is activated, the signal Din0 applied to MUX0 is latched by DF0 and applied to M. As long as CS0 is not reactivated the output signal of DFO is provided to its input via MUX0, thereby keeping the output signal of DF0 constant.

As can be seen in Fig. 2, the delay of Dt0 with respect to Din0 and the delay due to the flipflops DF01, DF02, DF03 of the detection circuit are such that the transition of Dt0 is detected and thus CSO is activated when Din0 is stable and the sampling of the signal Din0 by means of MUX0 and DF0 thus occurs at a stable instant of the latter signal, i.e. not at a transition thereof. Dout is thus synchronized with CLsys. In this case the delays are chosen in such a way that they lay as close as possible to the following edge of the associate demultiplexed input signal, Din0.

To be noted that in the considered embodiment the value transitions of Dt1, Dt3, Dt5 and Dt7 correspond with the rising edges of CLsys as can be seen in Fig. 2. As a result the corresponding transition detections can occur one clock period of CLsys too late due to the uncertainty of the instant in time at which the rising edge of CLsys and the value transition of DT1, DT3, DT5 and Dt7 occur. This uncertainty is, in practice, unknown and therefore it can occur that, at the moment of the transition of DT1, DT3, DT5 or DT7, the first flipflop of the associated detection circuit latches the value the related divided first clock signal had before the transition. But even then, the transition does not coincide with a transition of the associated demultiplexed input signal, but occurs one and a half clock period of CLsys earlier than a following transition of the associated demultiplexed input signal.

The above mentioned uncertainty on the transition of DT1, DT3, DT5 or DT7 and the positive transition of CLsys is reflected in Fig.2 by the dashed active parts of CS1, CS3, CS5, and CS7, which do not indicate that those dashed parts are two clock periods of CLsys long, but that they are either equal to the first or to the second subpart of the dashed parts. The resulting uncertainty on the transitions of Dout1, Dout3, Dout5 and Dout7 respectively is also indicated by the dashed parts thereof.

The output signals of DF0 to DF7, Dout0 to Dout7 are thus the signals Din0 to Din7 synchronized with the system clock signal CLsys.

Dout0 to Dout7 are then stored in the memory module M under control of CS0 for DOUT0 to DOUT3 and of CS4 for Dout4 to Dout7. It can indeed be seen on Figs. 2 and 2A that Dout0 to Dout3 are stable at the rising edge of CS0, whilst Dout4 to Dout7 are stable at the rising edge of CS4.

It has to be noted that, in order to be able to use only two control signals, i.e. CS0 and CS4, to control the storage in M of Dout0 to Dout7, the frequency variation of CLbyte has to remain within predetermined boundaries. If this is not the case, additional control signals have to be taken into account.

It has also to be noted that, as mentioned earlier, in case of a fixed relation between the frequency of the CLbyte and CLsys, Dout0 to Dout7 can be recombined to form a composite output signal Dout composed of at least 2 signals providing the frequency of CLbyte is greater than that of CLsys. Indeed multiplexing circuits could then be used to recombine Dout0 to Dout7. E.g. in case of a 1 to 2 relation between CLsys and CLbyte, Dout0 to Dout3 could be applied to a first multiplexer controlled by CS0, whilst Dout4 to Dout7 could be applied to a second one controlled by CS4 where both multiplexers would then be clocked by CLsys. The first multiplexer would then have to start multiplexing Dout0 to Dout3 at the rate of CLsys when CS0 is activated, whilst the second multiplexer would have to start multiplexing Dout4 to Dout7 when CS6 becomes active.

While the principles of the invention have been described above in connection with specific apparatus, it is to be clearly understood that this description is made only by way of example and not as a limitation on the scope of the invention which is defined by the appended claims.

## Claims

1. Synchronizing circuit for synchronizing a digital input signal (Din), synchronous with a first clock signal (CLbyte), with a second clock signal (CLsys), said circuit including a detection means (DC) controlled by said second clock signal to detect value transitions of a signal (Dt0, ..., Dt7) applied thereto and to accordingly provide a control signal (CS0, ..., CS7) indicative of said transition, and a sampling means (SM) also controlled by said second clock signal to sample a signal derived from said digital input signal (Din0, ..., Din7) under control of said control signal, thereby providing a synchronized ouput signal (Dout), characterized in that said synchronizing circuit additionally includes a demultiplexing means (DM0, ..., DM7, CLD) controlled by said first clock signal to demultiplex said input signal into a plurality of demultiplexed input signals (Din0, ..., Din7) constituting said derived digital input signal and a divider means (CLD) to generate from said first clock signal a plurality of frequency divided first clock signals (Dt0, ..., Dt7) each of which is applied to said detection means (DC) which derives therefrom an associated control signal (CS0, ..., CS7) to control the sampling of a corresponding one of said demultiplexed input signals (Din0, ..., Din7), said associated control signals constituting said control signal and said sampled demultiplexed output signals (Dout0, ..., Dout7) constituting said synchronized output signal (Dout).

2. Synchronizing circuit according to claim 1, characterized in that said detection means (DC) includes a plurality of detection circuits (DF01, DF02, DF03, XOR0;...;DF71, DF72, DF73, XOR7), each of which is associated to one of said frequency divided first clock signals and includes at least two cascaded flipflops (DF01, DF02, DF03;...;DF71, DF72, DF73), to an input of a first one (DF01;...DF71) of which said associated frequency divided first clock signal (Dt0;...;Dt7) is applied and respective outputs of which are connected to respective inputs of a comparison means (XOR0;...;XOR7) which provides said associated control signal (CS0;...;CS7).

3. Synchronizing circuit according to claim 1, characterized in that said sampling means (SM) includes a plurality of sampling circuits (MUX0, DF0;...;MUX7, DF7) each of which is associated with one of said demultiplexed input signals and includes a 2-to-1 multiplexer (MUX0;...;MUX7) controlled by said associated control signal (CS0; ... ;CS7) to generate at an output thereof, either said associated demultiplexed input signal or an output signal of a flipflop, controlled by said second clock signal (CLsys) and to an input of which an output of said 2-to-1 multiplexer is connected.

4. Synchronizing circuit according to claim 3, characterized in that each of said 2-to-1 multiplexers is adapted to generate said associated demultiplexed input signal when said transition of said associated divided first clock signal is detected.

5. Synchronizing circuit according to claim 1, characterized in that said divider means includes a counter generating said frequency divided first clock signals (Dtà, ..., Dt7) which have a frequency equal to the frequency of said first clock signal (CLsys) divided by said plurality, the the respective detection circuit to which each of said frequency divided first clock signals is applied being chosen in such a way that said frequency divided first clock signal is relatively delayed over a predetermined time interval with respect to said corresponding demultiplexed input signal.

6. Synchronizing circuit according to claim 1, characterized in that,when there is a predetermined constant relation between the frequency of said first and said second clock signal, said synchronizing circuit additionally includes recombinaton means to recombine said sampled demultiplexed input signals into a predetermined number of synchronized signals, said recombination means including a predetermined number of multiplexers equal to said predetermined number of synchronized signals and in that each of said multiplexers is adapted to multiplexe a second predetermined number of sampled demultiplexed input signals equal to said plurality of sampled demultiplexed input signals divided by said predetermined number of synchronized signals and is controlled by a predetermined one of said control signals and by said second clock signal, said predetermined control signal being chosen in such a way that the sampled demultiplexed input signals applied to the inputs of the controlled multiplexer are stable at the moment of said multiplexing which is started by said control signal and that no signal values are skipped during said multiplexing.

7. Synchronizing circuit according to claim 1, characterized in that, when there is no constant predetermined relation between the frequency of said first (CLbyte) and second (CLsys) clock signal, said sampled demultiplexed input signals (Dout0, ..., Dout7) are under control of predetermined ones (CS0,CS4) of said control signals stored in a memory module (M) to be subsequently read therefrom in a predetermined way.

8. Synchronizing circuit according to claim 5, characterized in that said predetermined interval is such that each of said associated demultiplexed input signals (Din0, ..., Din7) is sampled at an instance at which said signal is stable.

9. Synchronizing circuit according to claim 8, characterized in that said predetermined interval is such that each of said associated demultiplexed input signals is sampled at an instance in time laying as close as possible to a following value transition of said associated demultiplexed input signal.

10. Synchronizing circuit according to any of the previous claims, characterized in that said synchronizing circuit is part of a BroadBand Integrated Services Data Network.

## Patentansprüche

1. Synchronisierungsschaltung zum Synchronisieren eines mit einem ersten Taktsignal (CLbyte)synchronen digitalen Eingangssignals (Din) mit einem zweiten Taktsignal (CLsys), wobei die Schaltung ein von dem zweiten Taktsignal gesteuertes Detektormittel (DC) zum Detektieren von Wert-Übergängen eines daran anliegenden Signals (Dt0, ..., Dt7) und zum entsprechenden Bereitstellen eines den Übergang anzeigenden Steuersignals (CS0, ..., CS7) und ein ebenfalls von dem zweiten Taktsignal gesteuertes Abtastmittel (SM) zum Abtasten eines aus dem digitalen Eingangssignal (Din0, ..., Din7) unter der Steuerung des Steuersignals ermittelten Signals enthält, und dabei ein synchronisiertes Ausgangssignal (Dout) zur Verfügung stellt, dadurch gekennzeichnet, daß die Synchronisierungsschaltung darüber hinaus ein von dem ersten Taktsignal gesteuertes Demultiplexiermittel (DM0, ..., DM7, CLD) zum Demultiplexen des Eingangssignals in eine Mehrzahl von demultiplexierten Eingangssignalen (Din0, ..., Din7), welche das ermittelte digitale Eingangssignal bilden, und ein Teilermittel (CLD) enthält, um von dem ersten Taktsignal eine Mehrzahl von frequenzgeteilten ersten Taktsignalen (Dt0, ..., Dt7) zu erzeugen, von denen jedes an das Detektormittel (DC) angelegt ist, welches aus diesen ein zugeordnetes Steuersignal (CS0, ..., CS7) ermittelt, um die Abtastung eines entsprechenden einzelnen der demultiplexierten Eingangssignale (Din0, ..., Din7) zu steuern, und wobei die zugeordneten Steuersignale das Steuersignal bilden und die abgetasteten demultiplexierten Ausgangssignale (Dout0, ..., Dout7) das synchronisierte Ausgangssignal (Dout) bilden.

2. Synchronisierungsschaltung nach Anspruch 1, dadurch gekennzeichnet, daß das Detektormittel (DC) eine Mehrzahl von Detektorschaltungen (DF01, DF02, DF03, XOR0; ...; DF71, DF72, DF73, XOR7), von denen jede einem der frequenzgeteilten ersten Taktsignale zugeordnet ist und mindestens zwei Kaskaden-Flip-Flops (DF01, DF02, DF03; ...; DF71, DF72, DF73) enthält, wobei das zugeordnete frequenzgeteilte erste Taktsignal (Dt0; ..., Dt7) einem Eingang eines ersten derselben (DF01; ..., DF71) zugeführt wird und jeweilige Ausgänge desselben mit jeweiligen Eingängen eines Vergleichsmittels (XOR0; ...; XOR7) verbunden sind, das das zugeordnete Steuersignal (CS0; ...; CS7) liefert.

3. Synchronisierungsschaltung nach Anspruch 1, dadurch gekennzeichnet, daß das Abtastmittel (SM) eine Mehrzahl von Abtastschaltungen (MUX0, DF0; ...; MUX7, DF7) enthält, wobei jede einem einzelnen der demultiplexierten Eingangssignale zugeordnet ist und einen von dem zugeordneten Steuersignal (CS0; ...; CS7) gesteuerten 2-zu-1-Multiplexer (MUX0; ...; MUX7) enthält, um an einem Ausgang desselben entweder das zugeordnete demultiplexierte Eingangssignal oder ein von dem zweiten Taktsignal (CLsys) gesteuertes Ausgangssignal eines Flip-Flops zu erzeugen, und wobei an einem Eingang desselben ein Ausgang des 2-zu-1-Multiplexers angeschlossen ist.

4. Synchroniserungsschaltung nach Anspruch 3, dadurch gekennzeichnet, daß jeder der 2-zu-1-Multiplexer ausgelegt ist, das zugeordnete demultiplexierte Eingangssignal zu erzeugen, wenn der Übergang des zugeordneten geteilten ersten Taktsignals detektiert wird.

5. Synchronisierungsschaltung nach Anspruch 1, dadurch gekennzeichnet, daß das Teilermittel einen Zähler enthält, der die frequenzgeteilten ersten Taktsignale (Dt0, ..., Dt7) erzeugt, welche eine Frequenz gleich der Frequenz des ersten Taktsignals (CLsys) geteilt durch die Mehrzahl aufweisen, wobei die jeweilige Detektorschaltung, an die jedes der frequenzgeteilten ersten Taktsignale angelegt ist, derart ausgewählt ist, daß das frequenzgeteilte erste Taktsignal in bezug auf das entsprechende demultiplexierte Eingangssignal über ein vorbestimmtes Zeitintervall relativ verzögert ist.

6. Synchronisierungsschaltung nach Anspruch 1, dadurch gekennzeichnet, daß, wenn eine vorbestimmte konstante Beziehung zwischen der Frequenz des ersten und des zweiten Taktsignals besteht, die Synchronisierungsschaltung zusätzlich ein Rekombinationsmittel enthält, um die abgetasteten demultiplexierten Eingangssignale in eine vorbestimmte Anzahl von synchronisierten Signalen zu rekombinieren, wobei das Rekombinationsmittel eine vorbestimmte Anzahl von Multiplexern gleich der vorbestimmten Anzahl von synchronisierten Signalen enthält, und daß jeder der Multiplexer ausgelegt ist, eine zweite vorbestimmte Anzahl von abgetasteten demultiplexierten Eingangssignalen gleich der Mehrzahl von abgetasteten demultiplexierten Eingangssignalen geteilt durch die vorbestimmte Anzahl von synchronisierten Signalen zu multiplexen und von einem vorbestimmten einzelnen der Steuersignale und von dem zweiten Taktsignal gesteuert wird, wobei das vorbestimmte Steuersignal in der Weise gewählt ist, daß die an den Eingängen der gesteuerten Multiplexer angelegten abgetasteten demultiplexierten Eingangssignale in dem Moment der von dem Steuersignal gestarteten Multiplexierung stabil sind, und daß keine Signalwerte während der Multiplexierung übersprungen werden.

7. Synchronisierungsschaltung nach Anspruch 1, dadurch gekennzeichnet, daß, wenn keine konstante vorbestimmte Beziehung zwischen der Frequenz des ersten (CLbyte) und des zweiten (CLsys) Taktsignals besteht, die abgetasteten demultiplexierten Eingangssignale (Dout0, ..., Dout7) unter der Steuerung eines vorbestimmten einzelnen (CS0, CS4) der Steuersignale in einem Speichermodul (M) gespeichert werden, um nachfolgend in einer vorbestimmten Weise aus diesem ausgelesen zu werden.

8. Synchronisierungsschaltung nach Anspruch 5, dadurch gekennzeichnet, daß das vorbestimmte Intervall derart ist, daß jedes der zugeordneten demultiplexierten Eingangssignale (Din0, ..., Din7) zu einem Zeitpunkt abgetastet wird, zu dem das Signal stabil ist.

9. Synchronisierungsschaltung nach Anspruch 8, dadurch gekennzeichnet, daß das vorbestimmte Intervall derart ist, daß jedes der zugeordneten demultiplexierten Eingangssignale zu einem Zeitpunkt abgetastet wird, der so nahe wie möglich an einem folgenden Wert-Übergang des zugeordneten demultiplexierten Eingangssignals liegt.

10. Synchronisierungsschaltung nach einem der vorhergehenden Ansprüche, dadurch gekennzeichnet, daß die Synchronisierungsschaltung Teil eines Breitband-Integrierte-Dienste-Datennetzwerks ist.

## Revendications

1. Circuit de synchronisation afin de synchroniser un signal d'entrée numérique (Din), synchrone avec un premier signal d'horloge (CLbyte), avec un second signal d'horloge (CLsys), ledit circuit comprenant un moyen de détection (DC) commandé par ledit second signal d'horloge afin de détecter les valeurs de transition d'un signal (Dt0, ...., Dt7) qui lui est appliqué et de fournir ainsi un signal de commande (CS0, ..., CS7) représentatif de ladite transition, et un moyen d'échantillonnage (SM) également commandé par ledit second signal d'horloge afin d'échantillonner un signal dérivé dudit signal d'entrée numérique (Din0, ..., Din7) sous la commande dudit signal de commande, d'où la fourniture d'un signal de sortie synchronisé (Dout), caractérisé en ce que :
ledit circuit de synchronisation comporte en outre un moyen de démultiplexage (DM0, ..., DM7, CLD) commandé par ledit premier signal d'horloge afin de démultiplexer ledit signal d'entrée en une pluralité de signaux d'entrée démultiplexés (Din0, ..., Din7) constituant ledit signal d'entrée numérique dérivé et un moyen de diviseur (CLD) afin de produire à partir dudit premier signal d'horloge une pluralité de premiers signaux d'horloge divisés en fréquences (Dt0, ..., Dt7), dont chacun est appliqué audit moyen de détection (DC) qui dérive à partir d'eux un signal de commande associé (CS0, ..., CS7) afin de commander l'échantillonnage d'un signal correspondant desdits signaux d'entrée démultiplexés (Din0, ..., Din7), lesdits signaux de commande associés constituant ledit signal de commande et lesdits signaux de sortie démultiplexés échantillonnés (Dout0, ..., Dout7) constituant ledit signal de sortie synchronisé (Dout).

2. Circuit de synchronisation selon la revendication 1, caractérisé en ce que ledit moyen de détection (DC) comprend une pluralité de circuits de détection (DF01, DF02, DF03, XOR0; ... ; DF71, DF72, DF73, XOR7), dont chacun est associé à l'un desdits premiers signaux d'horloge divisés en fréquence et comporte au moins deux bascules en cascade (DF01, DF02, DF03; ... ; DF71, DF72, DF73), à une entrée d'un premier desquelles (DF01; ... ; DF71) est appliqué ledit premier signal d'horloge divisé en fréquence (Dt0, ... ; Dt7) et des sorties respectives desquelles sont connectées à des entrées respectives d'un moyen de comparaison (XOR0; ...: XOR7) qui fournit ledit signal de commande associé (CS0; ... ; CS7).

3. Circuit de synchronisation selon la revendication 1, caractérisé en ce que ledit moyen d'échantillonnage (SM) comprend une pluralité de circuits d'échantillonnage (MUX0, DF0; ... ; MUX7, DF7), chacun étant associé avec l'un desdits signaux d'entrée démultiplexés et comportant un multiplexeur 2/1 (MUX0; ... ; MUX7) commandé par ledit signal de commande associé (CS0; ... ; CS7) afin de produire à une sortie de celui-ci, soit ledit signal d'entrée démultiplexé associé soit un signal de sortie d'une bascule, sous la commande dudit second signal d'horloge (CLsys) et à une entrée de laquelle est connectée une sortie dudit multiplexeur 2/1.

4. Circuit de synchronisation selon la revendication 3, caractérisé en ce que chacun desdits multiplexeurs 2-1 est destiné à produire ledit signal d'entrée démultiplexé associé lorsque ladite transition dudit premier signal d'horloge divisé associé est détecté.

5. Circuit de synchronisation selon la revendication 1, caractérisé en ce que ledit moyen de diviseur comporte un compteur produisant lesdits premiers signaux d'horloge divisés en fréquence (Dt1, ..., Dt7) qui ont une fréquence égale à la fréquence dudit premier signal d'horloge (CLsys) divisée par ladite pluralité, le circuit de détection respectif auquel est appliqué chacun desdits premiers signaux d'horloge divisés en fréquence étant choisi de façon que ledit premier signal d'horloge divisé en fréquence soit relativement retardé sur un intervalle de temps prédéterminé par rapport audit signal d'entrée démultiplexé correspondant.

6. Circuit de synchronisation selon la revendication 1, caractérisé en ce que, lorsqu'il y a une relation constante prédéterminée entre la fréquence desdits premier et second signaux d'horloges ledit circuit de synchronisation comporte en outre un moyen de recombinaison afin de recombiner lesdits signaux d'entrée démultiplexés échantillonnés pour donner un nombre prédéterminé de signaux synchronisés, ledit moyen de recombinaison comportant un nombre prédéterminé de multiplexeurs égal audit nombre prédéterminé de signaux synchronisés, et en ce que chacun desdits multiplexeurs est destiné à multiplexer un second nombre prédéterminé de signaux d'entrée démultiplexés échantillonnés, égal à ladite pluralité de signaux d'entrée démultiplexés échantillonnés divisé par ledit nombre prédéterminé de signaux synchronisés et est commandé par un signal prédéterminé desdits signaux de commande et par ledit second signal d'horloge, ledit signal de commande prédéterminé étant choisi d'une manière telle que les signaux d'entrée démultiplexés échantillonnés qui sont appliqués aux entrées du multiplexeur commandé sont stables au moment dudit multiplexage qui est démarré par ledit signal de commande et en ce qu'aucune valeur de signal n'est sautée pendant ledit multiplexage.

7. Circuit de synchronisation selon la revendication 1, caractérisé en ce que, lorsqu'il n'y a aucune relation prédéterminée constante entre la fréquence desdits premier (CLbyte) et second (CLsys) signaux d'horloge, lesdits signaux d'entrée démultiplexés échantillonnés (Dout0; ... ; Dout7) sont sous la commande de signaux prédéterminés (CS0, CS4) desdits signaux de commande stockés dans un module de mémoire (M) pour y être lus ultérieurement d'une façon prédéterminée.

8. Circuit de synchronisation selon la revendication 5, caractérisé en ce que ledit intervalle prédéterminé est tel que chacun desdits signaux d'entrée démultiplexés associés (Din0; ... ; Din7) est échantillonné à l'instant où ledit signal est stable.

9. Circuit de synchronisation selon la revendication 8, caractérisé en ce que ledit intervalle prédéterminé est tel que chacun desdits signaux d'entrée démultiplexés associés est échantillonné à un instant situé aussi proche que possible d'une valeur de transition suivante dudit signal d'entrée démultiplexé associé.

10. Circuit de synchronisation selon l'une quelconque des revendications précédentes, caractérisé en ce que ledit circuit de synchronisation fait partie d'un réseau BroadBand Integrated Services Data Network (Réseau informatique de services intégrés à bande large).
